Europäisches Patentamt

European Patent Office

Office européen des brevets

(19)

(11) Publication number: **0 136 689**

**A2**

(12) # EUROPEAN PATENT APPLICATION

(21) Application number: **84111721.1**

(22) Date of filing: **01.10.84**

(51) Int. Cl.⁴: **B 60 T 13/24**

(30) Priority: **05.10.83 JP 186498/83**

(43) Date of publication of application:
**10.04.85 Bulletin 85/15**

(84) Designated Contracting States:
**DE FR GB**

(71) Applicant: **NISSAN MOTOR COMPANY, LIMITED**
**No.2, Takara-cho, Kanagawa-ku**
**Yokohama-shi Kanagawa-ken 221(JP)**

(72) Inventor: **Nakamura, Masatoshi**
**203 Hosoda-coop, 1292-1**
**Funako Atsugi-shi Kanagawa-ken(JP)**

(72) Inventor: **Kitamura, Terukiyo**
**27-21, Kinuta 6-chome**
**Setagaya-ku Tokyo(JP)**

(72) Inventor: **Kubota, Hitoshi**
**107-2, Mitake**
**Minamiashigara-shi Kanagawa-ken(JP)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

(54) **Vehicle brake system.**

(57) The position of a brake actuating member, such as a brake pedal, or the force applied to the brake actuating member is sensed. A desired rate of deceleration of a vehicle is determined on the basis of the sensed position or force. The actual rate of deceleration of the vehicle is adjusted to the desired rate of deceleration of the vehicle.

FIG.1

EP 0 136 689 A2

# VEHICLE BRAKE SYSTEM

## BACKGROUND OF THE INVENTION

This invention relates to a brake system for a vehicle.

In most vehicle brakes, when the operator depresses the brake pedal, he or she feels a reaction essentially proportional to the braking force. This reaction thus reflects the rate of deceleration of the vehicle, so that the operator habitually perceives the deceleration rate through the brake pedal. Such a perception is sometimes used in estimating where the vehicle will stop.

The rate of deceleration of the vehicle depends on not only the braking force but also other vehicle parameters, such as the vehicle load and the temperature of the brake pads. Accordingly, in cases where the vehicle load or the temperature of the brake pads vary, the force of depression of the brake pedal does not accurately reflect the deceleration rate. For reliable estimation of the stopping point of the vehicle, it is desirable that the force of depression of the brake pedal has an accurately fixed relationship with the rate of deceleration of the vehicle.

## SUMMARY OF THE INVENTION

It is an object of this invention to provide a vehicle brake system which exhibits an accurately fixed relationship between the force of depression of the brake pedal and the rate of deceleration of the vehicle.

In accordance with this invention, the position of a brake actuating member, such as a brake pedal, or the force applied to the brake actuating member is sensed. A desired rate of deceleration of a vehicle is determined on the basis of the sensed position or force. The actual rate of deceleration of the vehicle is adjusted to the desired rate of deceleration of the

.vehicle.

## BRIEF DESCRIPTION OF THE DRAWINGS

Fig. 1 is a diagram of a vehicle brake system according to a first embodiment of this invention.

Fig. 2 is a flowchart of a program for controlling operation of the control unit of Fig. 1.

Fig. 3 is a diagram of an valve arrangement used in place of the three-way valve of Fig. 1.

Fig. 4 is a diagram of a vehicle brake system according to a second embodiment of this invention.

Fig. 5 is a flowchart of a program for controlling operation of the control unit of Fig. 4.

Fig. 6 is a diagram of a vehicle brake system according to a third embodiment of this invention.

Like and corresponding elements are denoted by the same reference characters throughout the drawings.

## DESCRIPTION OF THE PREFERRED EMBODIMENTS

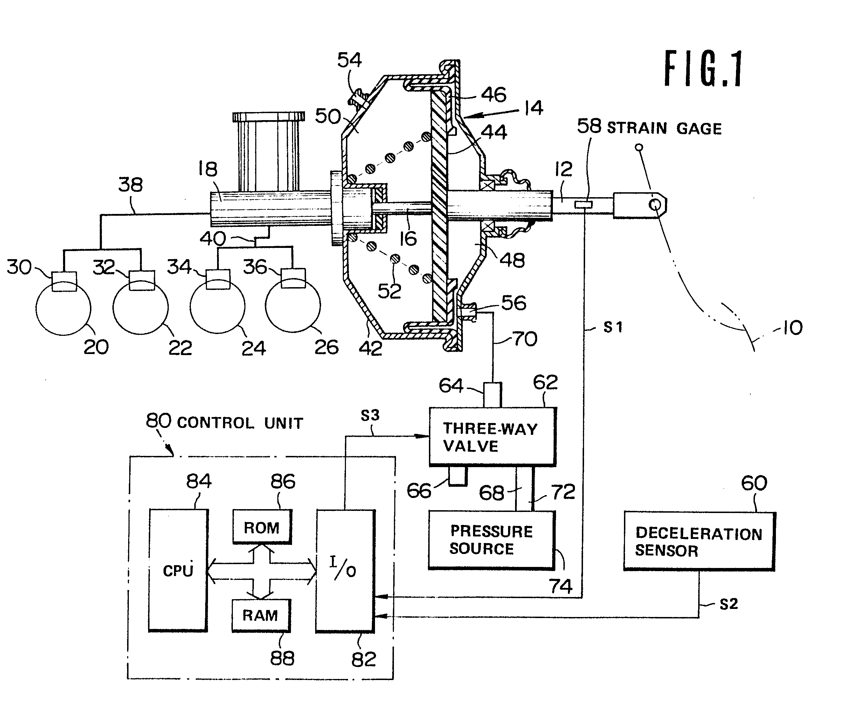

With reference to Fig. 1 showing a first embodiment of this invention, a brake pedal 10 is linked to an input rod 12 of a brake power booster 14 so that depression of the brake pedal 10 forces the input rod 12 to move axially. The power booster 14 includes an output or push rod 16 engaging a master cylinder 18. As the input rod 12 is driven by depression of the brake pedal 10, the output rod 16 pushes or actuates the master cylinder 18 with a force enhanced by the power booster 14.

Brake units 20, 22, 24, and 26 for front and rear vehicle wheels include front and rear wheel cylinders 30, 32, 34, and 36, respectively. The front wheel cylinders 30 and 32 are hydraulically connected to the master cylinder 18 via a hydraulic line 38. The rear wheel cylinders 34 and 36 are hydraulically connected to the master cylinder 18 via a hydraulic line 40. As the master cylinder 18 is driven, the wheel cylinders 30, 32, 34, and 36 are actuated by means of hydraulic pressure transmitted by the master cylinder to the wheel cylinders.

The power booster 14 includes a shell or casing 42 within which a power piston 44 is movably disposed. The input rod 12 movably extends into the shell 42 and connects to the power piston 44. A diaphragm 46 sealingly connected between the shell 42 and the power piston 44 divides the interior of the shell 42 into an adjustable pressure chamber 48 and a reference pressure chamber 50 in conjunction with the power piston 44. The push rod 16 secured to the power piston 44 movably extends out of the shell 42 and engages the master cylinder 18. A return spring 52 seated between the shell 42 and the power piston 44 urges the power piston 44 toward its rest position. The shell 42 is provided with a reference pressure inlet 54 which exposes the reference pressure chamber 50 to the open air. In this way, the reference pressure chamber 50 is supplied with atmospheric pressure. The shell 42 is provided with an adjustable pressure inlet 56 via which the adjustable pressure chamber 48 is supplied with an adjustable pressure as described hereafter. The power piston 44 is thus subjected to the differential between the atmospheric pressure and the adjustable pressure, thereby exerting an adjustable force on the master cylinder 18 in addition to the normal force resulting directly from depression of the brake pedal 10. Specifically, the braking force proportionally determined by the force applied to the master cylinder 18 increases as the pressure in the adjustable pressure chamber 48 rises.

A strain gage 58 mounted on the input rod 12 senses the axial strain on the input rod 12 which reflects the force of depression of brake pedal 10. In this way, the strain gage 58 monitors the depression force applied to the brake pedal 10 and generates an

electrical signal S1 representative thereof.

A displacement sensor may be used in place of the strain gage. In this case, the displacement sensor is associated with the input rod 12 to sense the axial displacement of the input rod 12 which is proportional to the degree of depression of the brake pedal 10 determined by the force of depression of brake pedal 10. The displacement sensor may include a potentiometer having a linearly movable control arm which is fixed to the input rod 12 to move with axial movement of the input rod 12. A constant voltage is applied across the resistor of the potentiometer. Accordingly, the voltage between one end of the resistor and the sliding point movable with position of the control arm varies as a function of the depression force applied to the brake pedal 10. This voltage is used as an electrical signal S1. In this way, the signal S1 indicates the depression force applied to the brake pedal 10 and also the degree of depression of the brake pedal 10, that is, the position of the brake pedal 10.

Other types of displacement sensors may be used, for example, to directly sense the degree of depression of the brake pedal 10 as an indication of the depression force applied to the brake pedal 10.

A deceleration sensor 60 monitors the rate of deceleration of the vehicle and generates an electrical signal S2 representative thereof. The deceleration sensor 60 includes a speed sensor and a differentiator. The speed sensor generates a voltage proportional to the speed of the vehicle. The differentiator differentiates this voltage and derives the deceleration rate signal S2.

The deceleration sensor 60 may be of other types including an inertial member movable relative to the body of the vehicle. The inertial member responds to the vehicle deceleration rate. This response is sensed by a known arrangement to generate the deceleration rate signal S2.

The deceleration sensor 60 may also be of the type which determines the vehicle deceleration rate by detecting the load on each of the front and rear vehicle wheels.

The deceleration sensor 60 may further be of a type which determines the vehicle deceleration rate by detecting deceleration-dependent parameters, such as the hydraulic pressure generated by the master cylinder 18, the braking torque, the temperature of brake pads, and the coefficient of friction between vehicle tires and the surface of the road.

Other known types of deceleration sensors 60 may be used.

An electrically-driven or electromagnetic three-way valve 62 includes first, second, and third ports 64, 66, and 68. When electrically de-energized, the valve 62 connects the first port 64 only to the second port 66. When electrically energized with a lower level, the valve 62 disconnects the first port 64 from any of the other ports 66 and 68. When electrically energized with a higher level, the valve 62 connects the first port 64 only to the third port 68.

The first port 64 is connected to the adjustable pressure inlet 56 via a pressure line 70. The second port 66 leads to the open air. The third port 68 is connected via a pressure line 72 to a pressure source 74, such as an air pump, generating a pressure higher than the atmospheric pressure. As the valve 62 is de-energized to connect the first port 64 only to the second port 66, the atmospheric pressure is supplied to the adjustable pressure chamber 48 of the power booster 14. In this case, the pressure in the adjustable pressure chamber 48 drops to a level equal to the pressure in the reference pressure chamber 50, so that the power piston 44 moves toward its rest position due to the force of the spring 52 and thus the braking force is reduced. Thus, the power booster 14 and the master cylinder 18 assume their rest positions and no braking force is applied provided that the brake pedal 10 is in its released position. As the valve 62 is energized with the higher level to connect the first port 64 only to the third port 68, the high pressure is supplied from the source 74 to the adjustable pressure chamber 48. In this case, the pressure in the adjustable pressure chamber 48 rises above the pressure in the reference pressure chamber 50, so that the power piston 44 moves away from its rest position and thus the braking force is enhanced. When the valve 62 is energized with the lower level to disconnect the first port 64 from any of the ports 66 and 68, the adjustable pressure chamber 48 is completely closed so that the pressure in this chamber 48 is essentially maintained as it is. This holds the braking force essentially unchanged.

A control or digital microcomputer unit 80 includes an input/output (I/O) circuit 82, a central processing unit (CPU) 84, a read-only memory (ROM) 86, and a random-access memory (RAM) 88, all mutually connected. The I/O circuit 82 is connected to the sensors 58 and 60 to receive the depression force signal S1 and the deceleration rate signal S2. On the basis of these signals S1 and S2, the control unit 80 generates a signal S3 designed for control of the three-way valve 62. The I/O circuit 82 is connected to the three-way valve 62 to apply the control signal S3 to the valve 62.

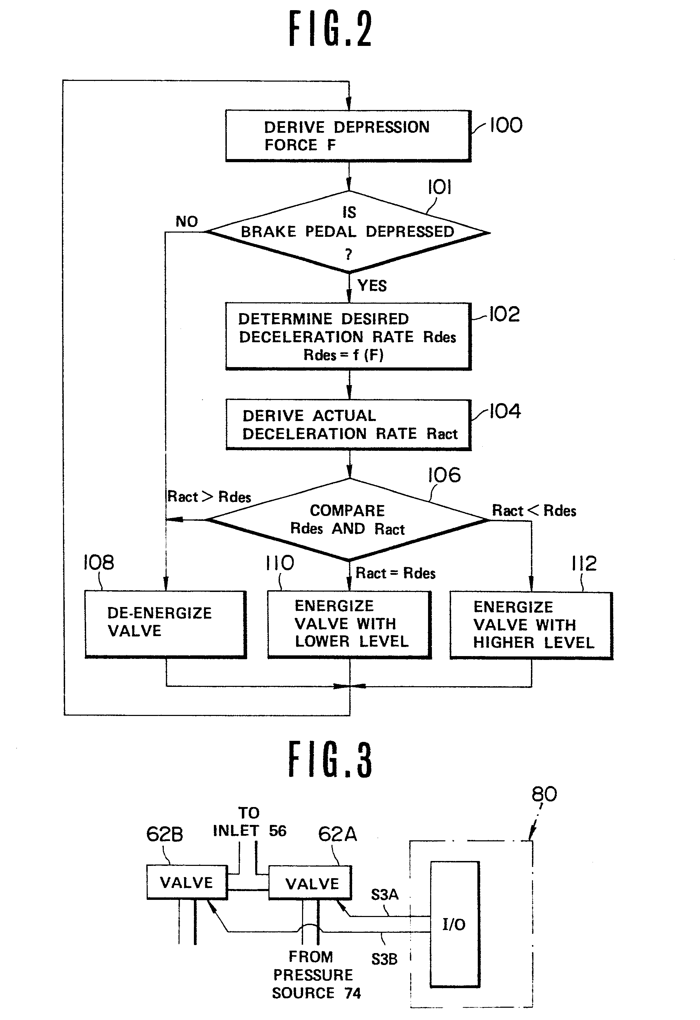

The control unit 80 operates in accordance with a program stored in the ROM 86. Fig. 2 is a flowchart of this program. In a first step 100 of this flowchart, the current level of depression force is derived from the depression force signal S1. In this flowchart, the variable F represents this current value of depression force. After the step 100, the program advances to a step 101.

In the step 101, the control unit 80 determines whether or not the brake pedal 10 is depressed, specifically whether or not the depression force level F exceeds zero. If the brake pedal 10 is depressed, that is, if the depression force level F exceeds zero, the program advances to a step 102. If the brake pedal 10 is not depressed, that is, if the depression force level F does not exceed zero, the program advances to a step 108.

In the step 108, the control signal S3 designed to de-energize the three-way valve 62 is outputted. This results in supply of atmospheric pressure to the adjustable pressure chamber 48 of the power booster 14, so that the power piston 44 is in its rest position at which the master cylinder 18 is inactive and thus no braking force is applied. After the step 108, the program returns to the first step 100. Accordingly, as long as the brake pedal 10 remains released, the power piston 44 is held in its rest position and thus no braking force is applied.

In the step 102, a desired value of deceleration rate is determined on the basis of the depression force value F. In this flowchart, the variable Rdes represents this desired deceleration rate value. Specifically, the desired deceleration rate value Rdes is calculated by means of a preset equation "Rdes = f(F)", where f(F) is a preset linear or non-linear function of the depression force value.

The desired deceleration rate value Rdes may be determined in another way as follows: the ROM 86 holds a table in which a set of desired deceleration rate values are plotted as a linear or non-linear function of the depression force value. The determination is carried out by referring to this table.

In a step 104 subsequent to the step 102, the current level of actual deceleration rate is derived from the deceleration rate signal S2. In this flowchart, the variable Ract represents this actual deceleration rate value. After the step 104, the program advances to a step 106.

In the step 106, the desired deceleration rate value Rdes and the actual deceleration rate value Ract are compared. If the actual value Ract is larger than the desired value Rdes, the program advances to the step 108. If the actual value Ract and the desired value Rdes are equal, the program advances to a step 110. If the actual value Ract is smaller than the desired value Rdes, the program advances to a step 112.

In the step 108, the control signal S3 designed to de-energize the three-way valve 62 is outputted. As described previously, this results in supply of atmospheric pressure to the variable pressure chamber 48 of the power booster 14.

In the step 110, the control signal S3 designed to energize the three-way valve 62 with the lower level is outputted. As described previously, this allows the pressure in the adjustable pressure chamber 48 of the power booster 14 to be maintained as it is.

In the step 112, the control signal S3 designed to energize the three-way valve 62 with the higher level is outputted. As described previously, this results in the supply of the high pressure to the variable pressure chamber 48 of the power booster 14.

After the steps 108, 110, and 112, the program returns to the first step 100. Accordingly, this flowchart is reiterated.

As a result of the steps 106 and 108, when the actual deceleration rate is higher than the desired deceleration rate, atmospheric pressure is supplied to the adjustable pressure chamber 48 of the power booster 14. The supply of atmospheric pressure reduces the braking force, thereby decreasing the actual deceleration rate.

As a result of the steps 106 and 110, when the actual deceleration rate is equal to the desired deceleration rate, the pressure in the adjustable pressure chamber 48 of the power booster 14 is maintained as it is. This holds the braking force unchanged, thereby also maintaining the actual deceleration rate as it is.

As a result of the steps 106 and 112, when the actual deceleration rate is smaller than the desired deceleration rate, the high pressure is supplied to the adjustable pressure chamber 48 of the power booster 14. The supply of the high pressure enhances the braking force, thereby increasing the actual deceleration rate.

In this way, the actual deceleration rate is maintained at a level essentially equal to the desired deceleration rate, and follows the desired deceleration rate if it deviates from the desired deceleration rate. It should be noted that the desired deceleration rate varies as a function of the depression force applied to the brake pedal 10. Since the degree of depression of the brake pedal 10 depends on the depression force applied to the brake pedal 10, the desired deceleration rate is also determined by the degree of depression of the brake pedal 10, that is, the position of the brake pedal 10.

In operation, while the brake pedal 10 remains released, the power booster 14 and the master cylinder 18 are at rest and thus no braking force is applied as described previously.

When the brake pedal 10 is depressed, the desired rate of vehicle deceleration is determined on the basis of the force of depression of the brake pedal 10 and then the actual rate of vehicle deceleration is derived. Immediately after depression of the brake pedal 10, the actual deceleration rate is usually smaller than the desired deceleration rate due to response lag in the hydraulic circuitry so that the high pressure is supplied to the adjustable pressure chamber 48 of the power booster 14. This enhances the braking force, thereby increasing the actual deceleration rate. When the actual deceleration rate increases to a level equal to the desired deceleration rate, the adjustable pressure chamber 48 is completely closed and the pressure in the chamber 48 is maintained as it is. This holds the braking force unchanged, thereby also maintaining the actual deceleration rate as it is. When the actual deceleration rate rises above the desired deceleration rate, the atmospheric pressure is supplied to the adjustable pressure chamber 48 of the power booster 14. This reduces the braking force, thereby decreasing the actual deceleration rate. In this way, the actual deceleration rate is maintained at a level essentially equal to the desired deceleration rate depending on the depression force applied to the brake pedal 10. Since the desired deceleration rate depends solely on the depression force, the actual deceleration rate is determined solely on the basis of the depression force and is independent of other vehicle parameters, such as the vehicle load and the temperature of brake pads.

When the brake pedal 10 is released, the atmospheric pressure is supplied to the adjustable pressure chamber 48 of the power booster 14. This allows the power booster 14 and the master cylinder 18 to assume their rest positions, thereby reducing the braking force to zero.

Fig. 3 shows a valve arrangement which can be used in place of the three-way valve 62 of Fig. 1. This arrangement includes electrically-driven or electromagnetic ON-OFF valves 62A and 62B. The adjustable pressure inlet 56 of the power booster 14 is connected to the pressure source 74 via the first valve 62A. The adjustable pressure inlet 56 leads to the open air via the second valve 62B. The first valve 62A is normally closed. The second valve 62B is normally open. When both of the valves 62A and 62B are electrically de-energized, atmospheric pressure is supplied to the adjustable pressure chamber 48 of the power booster 14. When the first valve 62A is electrically de-energized and the second valve 62B is electrically energized, the adjustable pressure chamber 48 is completely closed so that the pressure in this chamber 48 is maintained as it is. When both of the valves 62A and 62B are electrically energized, the high pressure is supplied from the pressure source 74 to the adjustable pressure chamber 48.

The control unit 80 generates control signals S3A and S3B designed for control of the valves 62A and 62B respectively. The valves 62A and 62B are connected to the I/O circuit 82 of the control unit 80 to receive these signals S3A and S3B.

In view of the valve arrangement of Fig. 3, the program for controlling the control unit 80 is modified as follows: in the step 108, the control signals S3A and S3B designed to de-energize the valves 62A and 62B are outputted. This results in supply of atmospheric pressure to the adjustable pressure chamber 48 of the power booster 14. In the step 110, the control signal S3A designed to de-energize the first valve 62A and the control signal S3B designed to energize the second valve 62B are outputted. This results in the complete closure of the adjustable pressure chamber 48 of the power booster 14. In the step 112, the control signal S3A designed to energize the first valve 62A and the control signal S3B designed to energize the second valve 62B are outputted. This results in the supply of the high pressure to the adjustable pressure chamber 48 of the power booster 14.

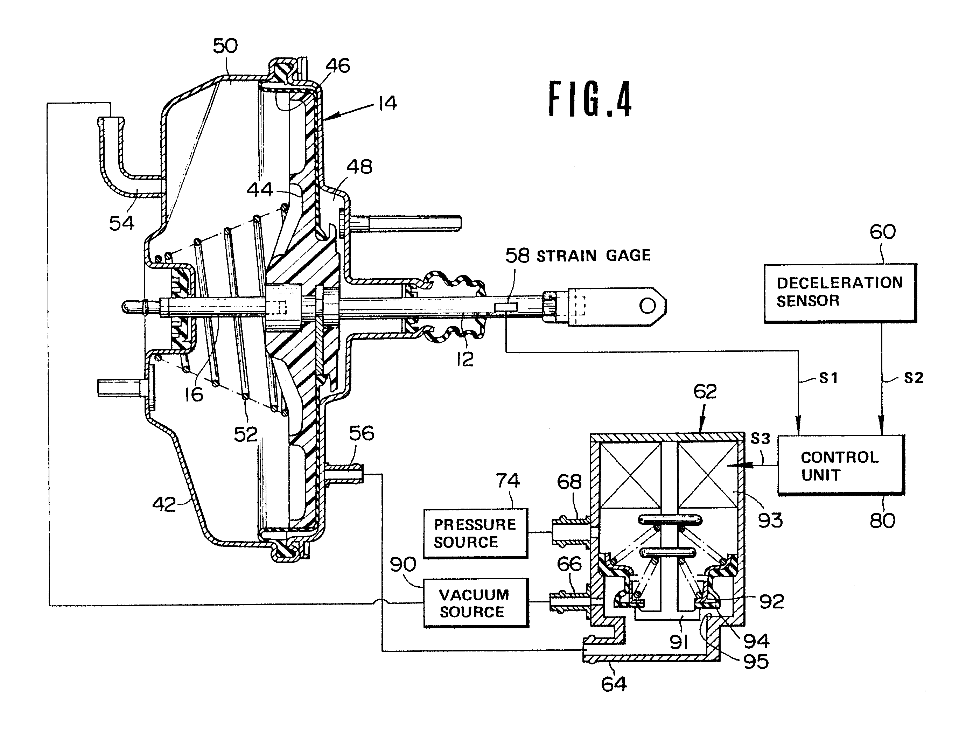

Fig. 4 shows a second embodiment of this invention which is designed in a manner similar to the embodiment of Fig. 1 except for the following design changes.

The reference pressure inlet 54 of the power booster 14 is connected to a vacuum source 90, such as the air intake manifold of a vehicular engine and a vacuum pump. Accordingly, the reference pressure chamber 50 is supplied with a vacuum from the vacuum source 90. In the case where the vacuum source 90 consists of the air intake manifold, a check valve is preferably disposed in the connection between the reference pressure chamber 50 and the vacuum source 90 to hold the vacuum in the chamber 50 when the vacuum developed in the air intake manifold weakens.

The second port 66 of the three-way valve 62 is connected to the vacuum source 90. The three-way valve 62 includes first and second valve members 91 and 92, and a solenoid 93 for driving the valve members 91 and 92. The solenoid 93 is electrically connected to the I/O circuit 82 of the control unit 80 to receive the control signal S3.

When the solenoid 93 is electrically de-energized via the control signal S3, the first valve member 91 contacts its seat 94 and thereby the first port 64 is disconnected from the third port 68. At the same time, the second valve member 92 is separated from its seat 95 and thereby the first port 64 is connected to the second port 66. In this case, the vacuum is supplied from the vacuum source 90 to the adjustable pressure chamber 48 of the power booster 14 so that the pressure differential across the power piston 44 drops to zero. This allows the braking force to drop.

When the solenoid 93 is electrically energized with a lower level via the control signal S3, the first valve member 91 remains in contact with its seat 94 and thereby the first port 64 continues to be disconnected from the third port 68. At the same time, the second valve member 92 contacts its seat 95 and thereby the first port 64 is disconnected from the third port 68. In this case, the adjustable pressure chamber 48 of the power booster 14 is completely closed so that the pressure in the chamber 48 is maintained as it is. This allows the braking force to be maintained as it is.

When the solenoid 93 is electrically energized with a higher level via the control signal S3, the first valve member 91 is separated from its seat 94 so that the first port 64 is connected to the third port 68. At the same time, the second valve member 92 remains in contact with its seat 95 so that the first port 64 continues to be disconnected from the second port 66. In this case, the high pressure is supplied from the pressure source 74 to the adjustable pressure chamber 48 of the power booster 14 so that the pressure differential across the power piston 44 rises. This allows the braking force to increase.

It should be understood that the pressure source 74 may consist of the open air.

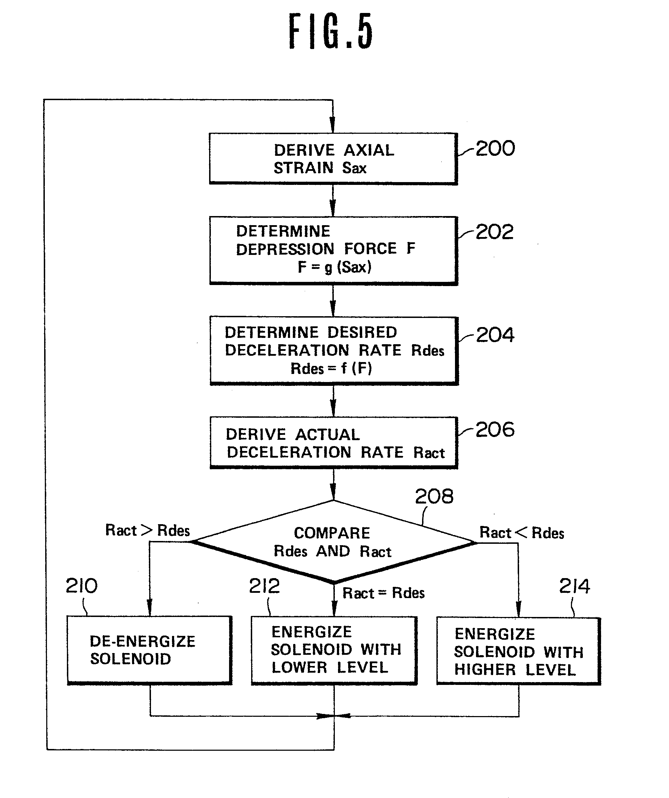

Fig. 5 is a flowchart of a program for controlling the control unit 80 of Fig. 4. In a first step 200 of this flowchart, the current value of the axial strain of the input rod 12 is derived from the signal Sl from the strain gage 58. In this flowchart, the variable Sax represents this axial strain value. After the step 200, the program advances to a step 202.

In the step 202, the current level of the depression force applied to the brake pedal 10 is determined on the basis of the axial strain value Sax. In this flowchart, the variable F represents this current depression force value.

In a step 204 subsequent to the step 202, a desired value of deceleration rate is determined on the basis of the depression force value F. Specifically, the determination of the desired deceleration rate value is carried out by referring to a preset relationship between the desired deceleration rate value and the depression force value. In this flowchart, the variable Rdes represents the desired deceleration rate value.

In a step 206 subsequent to the step 204, the current level of actual deceleration rate is derived from the deceleration rate signal S2. In this flowchart, the variable Ract indicates this actual deceleration rate value. After the step 206, the program advances to a step 208.

In the step 208, the desired deceleration rate value Rdes and the actual deceleration rate value Ract are compared. If the actual value Ract is larger than the desired value Rdes, the program advances to a step 210. If the actual value Ract and the desired value Rdes are equal, the program advances to a step 212. If the actual value Ract is smaller than the desired value Rdes, the program advances to a step 214.

In the step 210, the control signal S3 designed to de-energize the solenoid 93 is outputted. As described previously, this allows the braking force to drop.

In the step 212, the control signal S3 designed to energize the solenoid 93 with the lower level is outputted. As described previously, this allows the braking force to be maintained as it is.

In the step 214, the control signal S3 designed to energize the solenoid 93 with the higher level is outputted. As described previously, this allows the braking force to increase.

After the steps 210, 212, and 214, the program returns to the first step 200. Accordingly, this flowchart is reiterated.

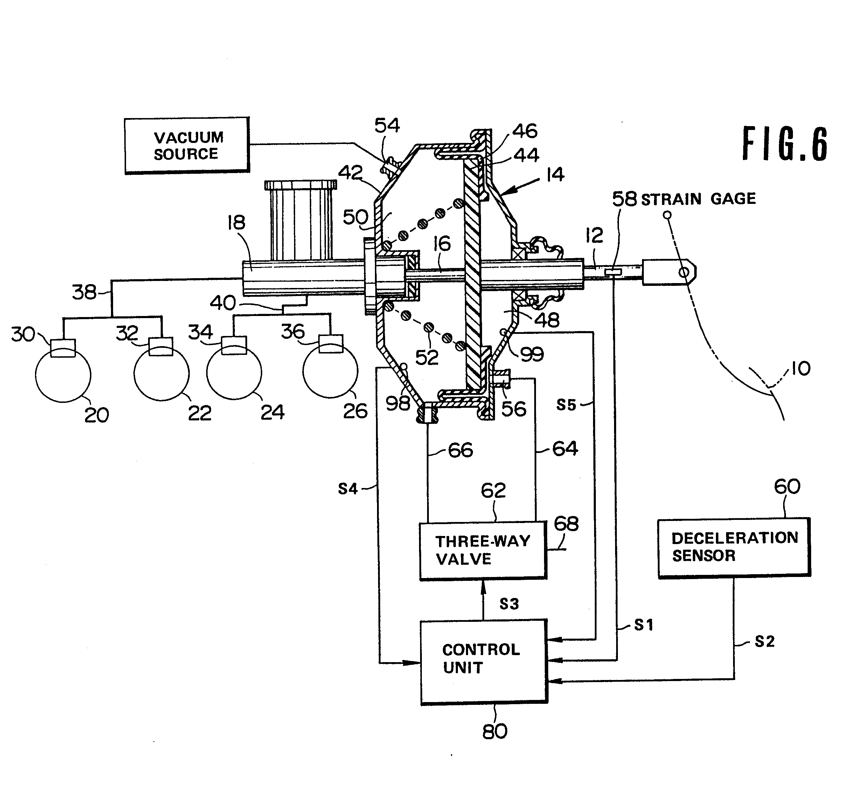

Fig. 6 shows a third embodiment of this invention which is designed in a manner similar to the embodiment of Fig. 4 except for design changes indicated below.

The second port 66 of the three-way valve 62 is connected to the vacuum source 90 by way of the reference pressure chamber 50 of the power booster 14. To reduce the pressure differential across the power piston 44, the adjustable pressure chamber 48 is brought into direct communication with the reference pressure chamber 50 via the three-way valve 62. The third port 68 of the three-way valve 62 leads to either the pressure source 74 or the open air.

A pressure sensor 98 disposed in the reference pressure chamber 50 senses the pressure in the chamber 50 and outputs a signal S4 indicative thereof. The I/O circuit 82 of the control unit 80 is connected to this sensor 98 to receive the pressure signal S4. Another pressure sensor 99 disposed in the adjustable pressure chamber 48 senses the pressure in the chamber 48 and outputs a signal S5 indicative thereof. The I/O circuit 82 of the control unit 80 is connected to this sensor 99 to receive the pressure signal S5. While monitoring the pressures in the chambers 48 and 50 via the pressure signals S4 and S5, the control unit 80 controls the three-way valve 62.

It should be understood that further modifications and variations may be made in this invention. For example, a tandem-type power booster may be used in place of the power boosters of Figs. 1, 4, and 6.

The pressure source 74 may be a liquid pump. In this case, hydraulic pressure is transmitted between the adjustable pressure chamber 48 of the power booster 14 and the pressure source 74.

A valve designed to continuously adjust the pressure from the pressure source 74 may be used in place of the three-way valve 62.

WHAT IS CLAIMED IS:

1.      A brake system for a vehicle, comprising:

        (a)  a brake actuating member (10);

        (b)  means (58) for sensing the position of the brake actuating member;

        (c)  means (80) for determining a desired rate of deceleration of the vehicle on the basis of the sensed position; and

        (d)  means for adjusting the actual rate of deceleration of the vehicle to the desired rate of deceleration of the vehicle.


2.      The system of claim 1, wherein the adjusting means comprises:

        (a)  means (60) for sensing the actual rate of deceleration of the vehicle;

        (b)  means (80) for comparing the desired and actual deceleration rates; and

        (c)  means for controlling the actual deceleration rate on the basis of the result of the comparison.


3.      A brake system for a vehicle, comprising:

        (a)  a brake pedal (10);

        (b)  means (58) for sensing a depression force applied to the brake pedal;

        (c)  means (80) for determining a desired rate of deceleration of the vehicle on the basis of the sensed depression force; and

        (d)  means for adjusting the actual rate of deceleration of the vehicle to the desired rate of deceleration of the vehicle.


4.      The system of claim 3, wherein the adjusting means comprises:

        (a)  means (60) for sensing the actual rate of deceleration of the vehicle;

(b) means for comparing the desired and actual deceleration rates; and

(c) means for controlling the actual deceleration rate on the basis of the result of the comparison.

5. A brake system for a vehicle, comprising:

(a) a brake pedal (10);

(b) means for applying a braking force to the vehicle when the brake pedal is depressed;

(c) a power booster (14) for enhancing the braking force to an adjustable degree;

(d) means (58) for sensing the depression force applied to the brake pedal;

(f) means (80) for determining a desired rate of deceleration of the vehicle on the basis of the sensed depression force;

(g) means (60) for sensing the actual rate of deceleration of the vehicle;

(h) means (80) for comparing the desired and actual deceleration rates; and

(i) means for increasing and decreasing the degree of enhancement of the braking force when the actual deceleration rate is less than and greater than the desired deceleration rate respectively.

6. The system of claim 5, wherein the power booster includes:

(a) a reference pressure chamber (50) supplied with a reference pressure;

(b) a adjustable pressure chamber (48) supplied with an adjustable pressure; and

(c) a power piston (44) subjected to the pressure differential between the reference and adjustable pressure chambers, the degree of enhancement of the braking force depending on the pressure differential applied to the power piston.

7.      The system of claim 6, wherein the increasing/decreasing means comprises:

(a) a three-way valve (62) having first, second, and third ports (64, 66, 68), the three-way valve being changeable between first and second positions, the first port being connected to the second port and being disconnected from the third port when the three-way valve is in its first position, the first port being disconnected from the second port and being connected to the third port when the three-way valve is in its second position, the first port being in communication with the adjustable pressure chamber, the second port being supplied with the reference pressure;

(b) means (74) for generating a working pressure different from the reference pressure; and

(c) means for supplying the working pressure to the third port of the three-way valve.

8.      The system of claim 5, further comprising means for maintaining the degree of enhancement of the braking force as it is when the actual deceleration rate is equal to the desired deceleration rate.

FIG.1

54

50

46

14

44

18

38

12

58 STRAIN GAGE

16

48

30 32 34 36

40

52

56

20 22 24 26

42

70

S1

10

64

62

80 CONTROL UNIT

S3

THREE-WAY
VALVE

66

68

72

84

86

60

ROM

I/O

PRESSURE
SOURCE

DECELERATION
SENSOR

CPU

74

RAM

S2

88

82

1/5

0136689

0136689

# FIG.2

DERIVE DEPRESSION FORCE F — 100

IS BRAKE PEDAL DEPRESSED ? — 101

NO

YES

DETERMINE DESIRED DECELERATION RATE Rdes
Rdes = f (F) — 102

DERIVE ACTUAL DECELERATION RATE Ract — 104

COMPARE Rdes AND Ract — 106

Ract > Rdes

Ract < Rdes

Ract = Rdes

108 — DE-ENERGIZE VALVE

110 — ENERGIZE VALVE WITH LOWER LEVEL

112 — ENERGIZE VALVE WITH HIGHER LEVEL

# FIG.3

62B — VALVE

TO INLET 56

62A — VALVE

S3A

80

I/O

FROM PRESSURE SOURCE 74

S3B

FIG.4

50
46
14
54
44
48
16
52
56
42

58 STRAIN GAGE
12

60
DECELERATION SENSOR

S1
S2

74
PRESSURE SOURCE
68
62
S3
93

90
VACUUM SOURCE
66
92

80
CONTROL UNIT

91
94
95
64

# FIG.5

```
┌──────────────────────┐
│  DERIVE  AXIAL       │──200
│  STRAIN  Sax         │
└──────────────────────┘
            ↓
┌──────────────────────┐
│  DETERMINE           │──202
│  DEPRESSION  FORCE F │
│      F = g (Sax)     │
└──────────────────────┘
            ↓
┌──────────────────────┐
│  DETERMINE DESIRED        │──204
│  DECELERATION RATE Rdes   │
│      Rdes = f (F)         │
└──────────────────────┘
            ↓
┌──────────────────────┐
│  DERIVE  ACTUAL      │──206
│  DECELERATION RATE Ract │
└──────────────────────┘
            ↓
           208
Ract > Rdes  ╱  COMPARE  ╲  Ract < Rdes
   ┌────────╱ Rdes AND Ract ╲────────┐
   │        ╲               ╱        │
   │          ╲           ╱          │
   │       212  ╲       ╱ Ract = Rdes│
  210           ↓              214
┌─────────────┐ ┌─────────────┐ ┌─────────────┐
│ DE-ENERGIZE │ │ ENERGIZE    │ │ ENERGIZE    │
│ SOLENOID    │ │ SOLENOID WITH│ │ SOLENOID WITH│
│             │ │ LOWER LEVEL │ │ HIGHER LEVEL│
└─────────────┘ └─────────────┘ └─────────────┘
```

FIG.6

VACUUM SOURCE

54 — 46 — 44 — 14
42 — 50 — 16 — 48 — 99
18 — 38 — 40 — 58 STRAIN GAGE
12 — 98 — 56 — 10
30 — 32 — 34 — 36
20 — 22 — 24 — 26 — 52
S5 — 64 — 66 — S4
62 — 68
THREE-WAY VALVE

DECELERATION SENSOR — 60

S3
S1 — S2
CONTROL UNIT
80

0136689